# EUROPEAN PATENT APPLICATION

(11) **EP 0 559 062 A1**
(43) Date of publication of application: **08.09.1993**
(21) Application number: 93102838.5
(22) Date of filing: 24.02.1993
(51) Int. Cl.: A01N 63/00, A01C 1/06

(54) **Seed priming composition, seeds primed with such composition and corresponding priming process**

(30) Priority: 06.03.1992 IT MI920501
(71) Applicant: AGRA SOCIETA' DEL SEME S.r.l., I-16128 Genova (IT)
(72) Inventor: Resca, Rita, I-40136 Bologna (IT); Manaresi, Gian Piero, I-48011 Alfonsine (RA) (IT)
(74) Representative: Gervasi, Gemma, Dr.

(57) **Abstract**

A seed priming composition comprises, besides the usual inert powders and a growth-stimulating microorganism, an osmoconditioning agent based on a polyalcohol, preferably glycerol, capable of preventing dehydration of the microorganism, thereby maintaining a high concentration thereof on the seed even after long storage periods.

## Description

The present invention relates to a seed priming composition and to a seed priming process. More in particular, it relates to a seed priming composition comprising inert powders and a microorganism.

By priming is meant in general the composition which the seed is coated with, and in particular the seed coating with inert powders, of either organic or inorganic nature, in order to confer a spheric shape to the seed. Such shape renders the seeds, in particular the small seeds or those having an irregular structure, more easily handable by the agricultural operator and better suitable for the accuracy sowing machines. Furthermore, it is a common practise to introduce pesticides of chemical nature into the priming composition, so that they are promptly available for the seed and can protect it more efficaciously. These products are usually in solution or in suspension and are applicated to the seeds prior to the seed coating with the priming powder layer.

Furthermore, the agricultural sector has been devoting a particular interest to the use of microbiological products to be applicated to vegetal cultures. Such products are microorganisms (bacteria, fungi, ec.) characterized by a growth-stimulating action on the plants or by a biological control action towards plant diseases.

One of the main factors capable of conditioning the use of these microorganisms on cultures either protected or in the open field, regards chiefly their formulation.

Such formulation shall exhibit characteristics capable of securing, first of all, a good preservation of the microorganism, maintaining unaltered the vitality and efficaciousness thereof, and at the same the modalities of use of the formulation must be consistent with the usual agronomic practises, without complicating them too much.

In order to simplify the treatments and to permit the contact between microorganisms and plant to occur more rapidly, the present trend is that of using inoculation or bacterization techniques, which consist in directly introducing a microorganism population in vegetative form into the seeds; the final target of such practise is at any rate that of securing the presence of a high number of microorganism cells in a so-called "artificial spermosphere", so as to guarantee the effectiveness of the treatment as from the earliest vegetative stages of the plant.

Such kind of treatment can fully develop its efficaciousness only if its possesses certain characteristics.

Among these characteristics, one of the most important is the inoculum amount i.e. the number of microorganism cells or vital individuals which are available for each seed.

In fact it was broadly proved that most of the microorganisms of this kind can exert a growth-stimulating action or an antagonism to patogenous agents only if at the time of the sowing at least 1 million to 10 millions of vital microorganisms per seed are present.

This apparently high number is justified by the unfavourable conditions which the microorganism can be subjected to due to processing and preservation treatments required by the seed.

In fact, if the seeds were sown in a sterile soil, in which the presence of indigenous microbic agents would be practically nil and in which the conditions could be considered as optimum, 100 microorganism cells per seed could be considered as a sufficient inoculation level; but in the real situation of a normal agricultural soil, where the environmental conditions can be adverse and where the presence of several other microorganisms generates competitions phenomena, in order to secure the survival of the strains utilized, much higher inoculation amounts are required.

Factors such as the (natural or artificial) substrate, on which the microorganism strain is made to develop and to multiply, the dulture age, the dilution method, the utilized carriers as well as the formulation drying rate and conditions have proved to exert an important action on the microorganism survival and efficiency.

A priming composition of the type mentioned at the beginning of the description is known from patent application EP-A-221012, which discloses a method of coating seeds with a protective coat containing a sporogenous microorganism (Chaematomium globosum). Such a priming composition can be problematic for the survival of the microorganisms during the seed storage in the presence of low humidity and at unfavourable temperatures, although the sporogenous microorganisms are naturally endowed with particular physiological and morphological adaptations for surviving and overcoming adverse conditions. In the case of non-sporogenous microorganisms, the probabilities to have at the sowing time an insufficient concentration of cells per seed considerably increase and make it impossible to practise the method of introducing the microorganism into the seed priming or coating.

In fact, the microbic cells cannot live in the absence of water, which is indispensable for the development of their vital processes.

However, not all the water amount contained in a substrate, measured as moisture per cent, can be utilized by the microorganism cells.

A part of the water can be utilized in bonds with the hydrophilic components of the substrate (salt, sugar and proteins) and only that part of total water which is free from such bonds is utilizable by the microorganisms for their metabolic requirements.

Bacteria are less resistant to the absence of water than yeasts and mildews, and in general the bacteria development stops when the substrate water activity is lower than 0.92-0.91 (corresponding to an amount of 12% of sodium chloride in a water solution).

The survival of a high number of individuals, however, is not a sufficient parameter to secure a continuation of the biological activity typical of the microorganism. Therefore this activity must be checked on the final product as it can be conditioned during treatments and formulation.

The formulation - as concerns the microorganism - must therefore secure:
- a sufficient inoculation dose;
- characteristics which permit the preservation of the microorganism vitality even for long periods;
- non-interference in the explication of the biological activity of the microorganism.

Therefore, while on one side it is necessary to take measures for protecting the microorganism, on the other side the formulation must also meet the following seed requirements :
- it must neither alter in any manner the sprouting power nor causing alterations such an increase in abnormal and black sprouts;
- the moisture level of the treated seed shall remain around 10%, so permitting the preservation of the seed even for long periods consistently with the commercial requirements and under standard storing conditions;
- the physico-mechanical characteristics of the primed seed shall not be adversely altered, what would compromise its compatibility with the farm implements.

Thus, it is an object of the present invention to provide a priming composition, which not only meets the requirements mentioned above, but also permits to maintain a high concentration of vital migroorganisms on the seed even after long storing periods.

According to the invention, this object is achieved in that the priming composition comprises at least an osmoconditioning agent capable of preventing dehydration of the microorganism.

By osmoconditioning agent is meant in general a product having moistening characteristics, i.e. capable of binding the free water molecules. Such products, therefore, prevent a complete dehydration of the substrate (priming coat) also in conditions of very low per cent humidity, furthermore eliminating the electrolytic effect due to the concentration of solutes and protecting the microorganism DNA and the other macromolecules, inglobating them in water molecule meshes (colloid protector effect).

In this way the bacteria, which, as already mentioned,cannot survive without water, can resist to dehydration due to a moisture level in the medium lower than 10%. Furthermore it is assumed that this additive, by reducing the free water content, not only prevents dehydration of the bacterium, but also slackens its activity, thereby maintaining it in a quiescent state.

Preferably the osmoconditioning agent is selected from the group comprising sugars, starches, dextrins, gelatines, polyalcohols and mixtures thereof.

In particular it is preferable to use a polyalcohol and among the polyalcohols, glycerol is particularly preferred.

Excellent results, in terms of emergence per cent, were obtained by inoculating the seed and/or the priming with bacteria belonging to genus Pseudomonas, and in particular to the strains of species P. Cepacia, P. Fluorescens and P. Putida.

Among the P. Fluorescens strains, excellent results were obtained by using the ones classified as NC 40186, 40187, 40188 and 40190.

Such microorganisms, although they have a so-called plant growth stimulating effect, are not capable of producing sheaths. By consequence, they do not possess conservation forms and belong to those, which are the most delicate to handle and have raised so far the greatest problems as regards their utilization in industrial grade formulations other than liquid or pulverulent protectants to be used at the sowing time.

Preferably, the microorganism concentration for each seed ranges from 20 to 80 millions of cells. Such concentration at the end of priming enables the microorganism to explicate its protective functions also in the open field and under unfavourable environmental conditions.

In the priming process according to the present invention the seeds are inoculated, prior to priming, with a concentrated bacterial suspension containing an osmoconditioning agent.

Preferably, also the pulverulent components of priming are previously inoculated with the same bacterial suspension additioned with an osmoconditioning agent and utilized to inoculate the seeds.

The osmoconditioning agent is preferably added to the bacterial suspension at a concentration ranging from 2 to 15 % by volume, more preferably from 3 to 7 % by volume.

To prevent cakings during inoculation of the components in powder, use is made of a technique based on a bacterization in more subsequent steps separated by one or more intermediate treatments. The primed seeds are dried in order to bring the moisture content to values ranging from 8 to 12 % by weight.

The methodology, experimented in particular on sugar beet seeds, comprises a bacterium multiplication in fermentors, using a proper substrate. Such substrate must be selected from those capable of permitting a development of the microorganism in great amounts and in the shortest time.

For the P. Putida and P. Fluorescens strains used in the tests, the growth substrate,which provides the quickest increase in the bacterium population is the King Medium Broth. It permits a microorganism multiplication of 1,000 cells/ml per day till obtaining in a few days a limit concentration of 10-100 milliards of cells per milliliters of broth. Above this concentration, the production of catabolic substances by the bacteria themselves could hinder a further multiplication and lead to a decrease thereof.

During the fermentation, an indispensable factor is the check of the sterility conditions in order to prevent the multiplication of foreign and undesired microorganisms so as to obtain a pure bacterial culture of the utilized strain.

Successively, the broth is centrifuged at 800 r.p. m. for 10 minutes at 4°C. A separation of the bacterial cells from the liquid phase represented by the nutritive broth is so obtained. The pellet of bacteria is suspended under stirring in an aqueous solution containing 9 g/l of NaCl. The bacterial suspension obtained on conclusion of this step results to be concentrated by 20 to 50 times as compared to the culture broth. Just in this bacterium concentration and resuspension step, an osmoconditioning additive is added.

Such additive is the determinant factor for the bacterium survival in a processing treatment under prohibitive conditions, that being possible without having to use a solid carrier foreign to the powders which the priming technical mixture is composed of.

During the process setting up, a few classes of products were evaluated, among which: sugars, starches, dextrins, gelatines and polyalcohols. Among these products, the following ones, in increasing order, proved to be efficacious and compatible with the process: gelatines, starches, polyalcohols such as ethylene glycol, 1,3-butandiol, 2-methyl-2,4-pentandiol, and in particular glycerol.

The last cited product exhibited the best osmoconditioning effect along with a full lack of counter-indications if it is utilized at a concentration of about 50 cc/liter with respect to the saline solution utilized for the resuspension of the bacteria after centrifugation.

Using the bacterial suspension, a treatment is carried out, which comprises the following steps:
a) inoculation of the seed;
b) inoculation of the powders.

Using the bacterial re-suspension, the imbibition of the seed (step a) in the proportion of 30-40% of its weight is carried out. This operation is conducted by atomizing the bacterial suspension on the seed and by rolling it in vessels, in order to obtain the maximum absorption on the cork-like or irregular surface typical of the sugar beet seed.

The inoculation of one or more pulverulent components utilized during the normal priming process (step b), in order to limit osmotic shocks to the bacterium caused by too drastic moisture reductions, is carried out firstly only on a part of the powders, in particular on the organic base component (cellulosic, ligneous), adding the solution in a proportion of 30-40% of the powder weight. Subsequently, the powder is mixed with the other priming components, bringing the percentage of the solution to about 13% by weight.

For logistic reasons and in order to reduce the necessity to preserve great amounts of concentrated bacterial suspension or of inoculated powders, a technique has been perfected, which permits the bacterization, carried out in consecutive steps, of the powder mixture utilized in the priming system, in order to obtain on a minimum amount of inoculated powders a proportionally high bacterial charge. Inoculation is effected in two or more successive times because, owing to the physico-chemical characteristics of the pulverulent particles, it not possible to add to the powder mixture each time a moisture higher than 60%, as caking would occur.

The various inoculation steps must therefore alternate with drying steps. The powders so treated can be preserved for months in a cool place without substantial losses of the bacterial charge.

Inoculation of the powders occurs in a two-reel horizontal mixer by atomizing the bacterial suspension into the pulverulent mass in order to prevent the formation of crumbs. The powder is then discharged into a hopper and is subjected to a short drying at 37°C on a belt furnace in order to bring the moisture level to 30%. The powder is then subjected to further inoculations following the same modalities and then, after partial drying, it is subjected to sieving to remove possible agglomerates (1% of the volume) formed during the treatment; these are then conveyed to a mill and joined to the powder mass.

After this treatment, the powder mixture is kept cool (15°C) also for several months in 1 cu.m. plastic bags (big bags). In this way it is possible to obtain a bacterial charge of 100 milliards of cells per gram of powder mixture, wherefore it is sufficient to use it in an amount equal to 10% of the pulverulent mass per seed.

At the end of priming, the seed is dried in a furnace at temperatures not exceeding 40°C in order to bring its moisture level to about 10%.

Glycerol is the preferred osmoconditioning agent as at a concentration of about 5% in the microorganism re-suspension solution it is compatible with both the microorganism and the seed. This regards in particular the pH and the nutritive effect towards possible patogenous agents and simple saprophyte infestants contained in the seed which, as is known, cannot be sterile. Furthermore, the additive does not involve interaction phenomena with the powders utilized in the process, which consist of cellulosic material and clay and possess a colloidal effect.

During the processing, furthermore, neither the mixability characteristics of the powders, nor visibly the structure of the particles composing them are altered, and in particular no crumbs form.

The novel aspect of the technique resides also in its adaptability to the conventional priming methods without involving substantial modifications and therefore without affecting the sophisticated technical characteristics thereof which have been perfected in the course of several years and have taken into consideration problems such as emergence rate and compatibility with the sowing machines.

Fully unaltered are left the characteristics of mechanical resistance to rolling and to suction, which the seed is subjected to during the sowing.

The technique consists therefore in introducing a component in solution which does not negatively interact with the physical characteristics of the priming material and does not influence the vegetative characteristics and behaviour of the seed, as is revealed by the labor analyses and the emergence determinations in the open field. The solution positively amalgamates with the inert components enhancing the colloidal characteristics and therefore exerting a higher protection on the microorganism and securing the stimulating and biological effect of the treatment. The effect of the addition of glycerol to the microbiological suspension during extraction and concentration is evidenced by comparing the results of the analyses carried out during the processing.

When the bacteria concentration in the concentrated suspension ready for use is of 500 milliards of cells/ml, the theoretical concentration obtainable on the primed seed at the end of the process as a function of the used doses is equal to 5 milliards of cells/seed.

Using the above-described inoculation technique but without addition of the osmoconditioning additive, a concentration of five thousand cells/seed (decrease by one million times) was obtained at the end of the process.

The bacterial population per seed has reached with this system an absolutely optimum inoculation level, which is necessary to permit the treatment to explicate its characteristics also in the open field and in the presence of unfavourable environmental conditions.

The primed seed moisture is brought to a level below 10% as is required to obtain a good conservation.

Biological and microbiological tests carried out at successive times have proved that the microorganism survives and that the inoculation amount does not decrease below one million cells for a conservation period up to 165 days at 15°C and decreases below hundred thousand bacteria per seed for a conservation period longer than 230 days.

As regards the persistence of the biological activity, this activity was evidenced by the results obtained by using primed seeds in tests conducted in the open field in comparison with the conventional treatments, according to the following example.

### EXAMPLE

Tests were conducted on two varieties of sugar beets (CV.A and CV.B) using a Pseudomonas Fluorescens strain of ICI (NC 40186) as a microorganism and glycerol as an osmoconditioning agent (concentration of 5% by volume on bacterium re-suspension saline solution). The concentration of the bacteria after centrifugation (5x10¹¹ cell/ml) and in the primed seed, kept at 15°C, was determined at regular time intervals. Such concentrations in the primed seed are reported in the following Table.

| | CV.A cell/seed | CV.B cell/seed |
|---|---|---|
| 4 days | 2,96x10⁷ | 2,96x10⁷ |
| 12 days | 2,32x10⁷ | 2,77x10⁷ |
| 40 days | 1,4x10⁷ | 2,1x10⁷ |
| 60 days | 8x10⁶ | 2x10⁷ |
| 135 days | 4x10⁶ | 2x10⁶ |
| 190 days | 5x10⁶ | 6x10⁵ |
| 240 days | 1,9x10⁵ | 1,6x10⁴ |

Using the seeds preserved for 190 days, tests in the open field were carried out, making comparisons with seeds primed with two different chemical agents and with primed seeds without any additive. The results, obtained by making the average between the two seed varieties, are reported in the following Table.

| | % EMERGENCE | % ON UNTREATED CHECK (*) |
|---|---|---|
| Seed primed by microbiological treatment | 59.05 | 107.50 |
| Seed primed by chemical treatment No. 1 (TMTD + TACHIGAREN) | 56.99 | 103.75 |
| Seed primed by chemical treatment No. 2 (TMTD + ROVRAL) | 56.80 | 103.40 |
| Seed primed without treatments (*) | 54.93 | 100 |

The treatment conforming to the present invention can be carried out on any types of seeds, for example seeds of horticultural plants (tomato, onion, etc.), seeds of flower-bearing plants (petunia, etc.), and in particular on sugar beet seeds, and utilizing any priming technologies, irrespectively of the type of equipment employed and of the nature of the powders usually utilized.

This type of processing, besides not causing a drastic decrease in the bacterial population during the seed treatment, has also proved to permit the survival of the microorganisms for several months inside the seed during its preservation at storing temperature (about 15°C), as it is apparent from the results reported in the example.

In fact, the seed manufacturing companies are used to process the seed and to prime it in the months from October to January. For the autumn sowings the seed is sold and sowed in October while for the spring sowings it is sold and sowed in February/March.

Therefore, the time elapsing from the processing to the sowing is at the most of 4 or 5 months during which the temperature in the storages can vary from 0° to 20°C. These conditions permit that the bacterial concentration of the primed seed remains substantially the same until the sowing.

Considering that the priming process is utilized also for coating many other types of seeds, the microbiological treatment according to the present invention can be extended to a number of vegetable species.

Furthermore, thanks to the characteristics of the microorganisms, on which the technique has been perfected, the process can be extended for the inoculation with any bacterial and fungine strains.

## Claims

1. A seed priming composition of the type comprising inert powders and a microorganism, characterized in that it comprises at least an osmoconditioning agent capable of preventing dehydration of the microorganism.

2. The composition of claim 1, characterized in that the osmoconditioning agent is selected from the group consisting of sugars, starches, dextrins, gelatines, polyalcohols and mixtures thereof.

3. The composition of claim 2, characterized in that the osmoconditioning agent is a polyalcohol.

4. The composition of claim 3, characterized in that the osmoconditioning agent is glycerol.

5. The composition of any of the preceding claims, characterized in that the microorganism is a bacterium.

6. The composition of claim 5, characterized in that the microorganism belongs to genus Pseudomonas.

7. The composition of claim 6, characterized in that the miorganism belongs to the strains of species P. Cepacia, P. Fluorescens and P. Putida.

8. The composition of claim 7, characterized in that the microorganism is selected from Pseudomonas Fluorescens NC 40186, NC 40187, NC 40188, NC 40190.

9. The composition of an of the preceding claims, characterized in that the microorganism concentration ranges from 20 to 80 millions of cells per seed.

10. A primed seed, particularly of sugar beet, of the type comprising a priming containing inert powders and a microorganism, characterized in that the priming contains an osmoconditioning agent capable of preventing dehydration of the microorganism.

11. The primed seed of claim 10, characterized in that it exhibits a priming composition conforming to any of claims 1 to 9.

12. A process for priming seeds, characterized in that a bacterial suspension containing an osmoconditioning agent is inoculated on to the seeds prior to priming.

13. The process of claim 12, characterized in that it comprises the following steps of
- preparing a bacterial suspension containing an osmoconditioning agent,
- inoculating the seeds with said bacterial suspension,
- inoculating one or more pulverulent components with said bacterial suspension,
- priming the seeds with said pulverulent components and
- drying the primed seeds.

14. The process of claim 13, characterized in that the osmoconditioning agent at a concentration ranging from 2 to 15% by volume is added to the bacterial suspension.

15. The process of claim 14, characterized in that the concentration of the osmoconditioning agent in the bacterial suspension ranges from 3 to 7% by volume.

16. The process of any of the preceding claims 12 to 15, characterized in that the osmoconditioning agent is selected from the group consisting of sugars, starches, dextrins, gelatines, polyalcohols and mixtures thereof.

17. The process of claim 16, characterized in that the osmoconditioning agent is a polyalcohol.

18. The process of claim 17, characterized in that the osmoconditioning agent is glycerol.

19. The process of claim 13, characterized in that inoculation of the pulverulent components is carried out in more steps separated by one or more intermediate dryings.

20. The process of any of the preceding claims 12 to 19, characterized in that the microorganism in the bacterial suspension is selected from Pseudomonas Fluorescens NC 40186, NC 40187, NC 40188, NC 40190.
